(19) Europäisches Patentamt
European Patent Office
Office européen des brevets

(11) **EP 2 777 269 B1**

(12) **FASCICULE DE BREVET EUROPEEN**

(45) Date de publication et mention
de la délivrance du brevet:
**16.09.2015 Bulletin 2015/38**

(51) Int Cl.:
*H04N 19/176* *(2014.01)*    *H04N 19/196* *(2014.01)*
*H04N 19/50* *(2014.01)*    *H04N 19/147* *(2014.01)*
*H04N 19/46* *(2014.01)*    *H04N 19/463* *(2014.01)*
*H04N 19/91* *(2014.01)*    *H04N 19/467* *(2014.01)*
*H04N 19/167* *(2014.01)*    *H04N 19/85* *(2014.01)*

(21) Numéro de dépôt: **12794437.9**

(22) Date de dépôt: **06.11.2012**

(86) Numéro de dépôt international:
**PCT/FR2012/052551**

(87) Numéro de publication internationale:
**WO 2013/068683 (16.05.2013 Gazette 2013/20)**

(54) **PROCÉDÉ DE CODAGE ET DÉCODAGE D'IMAGES, DISPOSITIF DE CODAGE ET DÉCODAGE ET PROGRAMMES D'ORDINATEUR CORRESPONDANTS**

VERFAHREN ZUR CODIERUNG UND DECODIERUNG VON BILDERN, CODIERUNGS- UND DECODIERUNGSVORRICHTUNG SOWIE ENTSPRECHENDE COMPUTERPROGRAMME

METHOD FOR ENCODING AND DECODING IMAGES, ENCODING AND DECODING DEVICE, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2011 FR 1160114**

(43) Date de publication de la demande:
**17.09.2014 Bulletin 2014/38**

(73) Titulaire: **Dolby International AB**
**1101 CN Amsterdam Zuidoost (NL)**

(72) Inventeurs:
• **HENRY, Felix**
**35760 SAINT GREGOIRE (FR)**
• **CLARE, Gordon**
**35740 Pace (FR)**

(74) Mandataire: **Conroy, John et al**
**Fish & Richardson P.C.**
**Highlight Business Towers**
**Mies-van-der-Rohe-Straße 8**
**80807 München (DE)**

(56) Documents cités:

• **HADAR O ET AL: "Rate distortion optimization for efficient watermarking in the DCT domain", BROADBAND MULTIMEDIA SYSTEMS AND BROADCASTING, 2008 IEEE INTERNATIONAL SYMPOSIUM ON, IEEE, PISCATAWAY, NJ, USA, 31 mars 2008 (2008-03-31), pages 1-8, XP031268612, ISBN: 978-1-4244-1648-6**
• **JEAN-MARC THIESSE ET AL: "Rate Distortion Data Hiding of Motion Vector Competition Information in Chroma and Luma Samples for Video Compression", IEEE TRANSACTIONS ON CIRCUITS AND SYSTEMS FOR VIDEO TECHNOLOGY, IEEE SERVICE CENTER, PISCATAWAY, NJ, US, vol. 21, no. 6, 1 juin 2011 (2011-06-01), pages 729-741, XP011325921, ISSN: 1051-8215, DOI: 10.1109/TCSVT.2011.2130330 cité dans la demande**
• **PARUCHURI J K ET AL: "Joint optimization of data hiding and video compression", CIRCUITS AND SYSTEMS, 2008. ISCAS 2008. IEEE INTERNATIONAL SYMPOSIUM ON, IEEE, PISCATAWAY, NJ, USA, 18 mai 2008 (2008-05-18), pages 3021-3024, XP031392649, ISBN: 978-1-4244-1683-7**

- **QIMING LI ET AL: "A Reversible Data Hiding Scheme for JPEG Images", 21 septembre 2010 (2010-09-21), ADVANCES IN MULTIMEDIA INFORMATION PROCESSING - PCM 2010, SPRINGER BERLIN HEIDELBERG, BERLIN, HEIDELBERG, PAGE(S) 653 - 664, XP019151677, ISBN: 978-3-642-15701-1 le document en entier**

**Description**

Domaine de l'invention

La présente invention se rapporte de manière générale au domaine du traitement d'images, et plus précisément au codage et au décodage d'images numériques et de séquences d'images numériques.

L'invention peut ainsi, notamment, s'appliquer au codage vidéo mis en oeuvre dans les codeurs vidéo actuels (MPEG, H.264, etc) ou à venir (ITU-T/VCEG (H.265) ou ISO/MPEG (HEVC).

Arrière-plan de l'invention

Les codeurs vidéo actuels (MPEG, H.264, ...) utilisent une représentation par blocs de la séquence vidéo. Les images sont découpées en macro-blocs, chaque macro-bloc est lui-même découpé en blocs et chaque bloc, ou macro-bloc, est codé par prédiction intra-images ou inter-images. Ainsi, certaines images sont codées par prédiction spatiale (prédiction intra), tandis que d'autres images sont codées par prédiction temporelle (prédiction inter) par rapport à une ou plusieurs images de référence codées-décodées, à l'aide d'une compensation en mouvement connue par l'homme de l'art.

Pour chaque bloc est codé un bloc résiduel, encore appelé résidu de prédiction, correspondant au bloc original diminué d'une prédiction. Les blocs résiduels sont transformés par une transformée de type transformée en cosinus discrète (DCT), puis quantifiés à l'aide d'une quantification par exemple de type scalaire. Des coefficients dont certains sont positifs et d'autres négatifs sont obtenus à l'issue de l'étape de quantification. Ils sont ensuite parcourus dans un ordre de lecture généralement en zigzag (comme dans la norme JPEG), ce qui permet d'exploiter le nombre important de coefficients nuls dans les hautes fréquences. A l'issue du parcours précité, une liste monodimensionnelle de coefficients est obtenue, laquelle sera appelée « résidu quantifié ». Les coefficients de cette liste sont alors codés par un codage entropique.

Le codage entropique (par exemple de type codage arithmétique ou codage de Huffman) est effectué de la façon suivante :

- une information est codée entropiquement pour indiquer l'emplacement du dernier coefficient non nul de la liste,
- pour chaque coefficient situé avant le dernier coefficient non nul, une information est codée entropiquement pour indiquer si le coefficient est nul ou pas,
- pour chaque coefficient non nul indiqué précédemment, une information est codée entropiquement pour indiquer si le coefficient est égal à un ou pas,
- pour chaque coefficient non nul et non égal à un situé avant le dernier coefficient non nul, une information d'amplitude (valeur absolue du coefficient diminuée de deux) est codée entropiquement,

- pour chaque coefficient non nul, le signe qui lui est affecté est codé par un '0' (pour le signe +) ou un '1' (pour le signe -).

Selon la technique H.264 par exemple, lorsqu'un macrobloc est découpé en blocs, un signal de données, correspondant à chaque bloc, est transmis au décodeur. Un tel signal comprend :

- les résidus quantifiés contenus dans la liste précitée,
- des informations représentatives dû mode de codage utilisé, en particulier:

  • le mode de prédiction (prédiction intra, prédiction inter, prédiction par défaut réalisant une prédiction pour laquelle aucune information n'est transmise au décodeur (« en anglais « skip »)) ;
  • des informations précisant le type de prédiction (orientation, image de référence, ...) ;
  • le type de partitionnement ;
  • le type de transformée, par exemple DCT 4x4, DCT 8x8, etc...
  • les informations de mouvement si nécessaire ;
  • etc.

Le décodage est fait image par image, et pour chaque image, macrobloc par macrobloc. Pour chaque partition d'un macrobloc, les éléments correspondants du flux sont lus. La quantification inverse et la transformation inverse des coefficients des blocs sont effectuées pour produire le résidu de prédiction décodé. Puis, la prédiction de la partition est calculée et la partition est reconstruite en ajoutant la prédiction au résidu de prédiction décodé.

Le codage intra ou inter par compétition, tel que mis en oeuvre dans la norme H.264, repose ainsi sur la mise en compétition de différentes informations de codage tels que celles précitées, dans le but de sélectionner le meilleur mode, c'est-à-dire celui qui optimisera le codage de la partition considérée selon un critère de performance prédéterminé, par exemple le coût débit/distorsion bien connu de l'homme du métier.

Les informations représentatives du mode de codage sélectionné sont contenues dans le signal de données transmis par le codeur au décodeur. Le décodeur est ainsi capable d'identifier le mode de codage sélectionné au codeur, puis d'appliquer la prédiction conforme à ce mode.

Dans le document « Data Hiding of Motion Information in Chroma and Luma Samples for Video Compression », J.-M. Thiesse, J. Jung and M. Antonini, International workshop on multimédia signal processing, 2011, il est présenté un procédé de dissimulation de données (traduction anglaise de « Data Hiding ») mis en oeuvre au cours d'une compression vidéo.

Plus précisément, il est proposé d'éviter d'inclure dans le signal à transmettre au décodeur au moins un index de compétition tel qu'issu d'une pluralité d'index de compétition à transmettre. Un tel index est par exemple l'index MVComp qui représente une information permettant d'identifier le prédicteur de vecteur de mouvement utilisé pour un bloc prédit en mode Inter. Un tel index qui peut valoir 0 ou 1, n'est pas inscrit directement dans le signal de données codées, mais transporté par la parité de la somme des coefficients du résidu quantifié. Une association est créée entre la parité du résidu quantifié et l'index MVComp. A titre d'exemple, la valeur paire du résidu quantifié est associée à l'index MVComp de valeur 0, tandis que la valeur impaire du résidu quantifié est associée à l'index MVComp de valeur 1. Deux cas peuvent se présenter. Dans un premier cas, si la parité du résidu quantifié correspond déjà à celle de l'index MVComp que l'on veut transmettre, le résidu quantifié est codé de façon classique. Dans un deuxième cas, si la parité du résidu quantifié est différente de celle de l'index MVComp que l'on veut transmettre, il est procédé à une modification du résidu quantifié de manière à ce que sa parité soit la même que celle de l'index MVComp. Une telle modification consiste à incrémenter ou décrémenter un ou plusieurs coefficients du résidu quantifié d'une valeur impaire (ex : +1, -1, +3, -3, +5, -+5...) et de ne retenir que la modification qui optimise un critère prédéterminé, en l'occurrence le coût débit-distorsion précité.

Au décodeur, l'index MVComp n'est pas lu dans le signal. Le décodeur se contente simplement de déterminer classiquement le résidu. Si la valeur de ce résidu est paire, l'index MVComp est mis à 0. Si la valeur de ce résidu est impaire, l'index MVComp est mis à 1.

Conformément à la technique qui vient d'être présentée, les coefficients qui subissent la modification ne sont pas toujours choisis de façon optimale, de sorte que la modification appliquée entraîne des perturbations dans le signal transmis au décodeur. De telles perturbations nuisent inévitablement à l'efficacité de la compression vidéo.

Par ailleurs, l'index MVComp ne constitue pas l'information la plus intéressante à dissimuler car les probabilités que cet index soit égal à 0 ou à 1 ne sont pas égales. En conséquence, si cet index est codé de façon classique par un codage entropique, il sera représenté, dans le fichier compressé à transmettre au décodeur, par une quantité de données inférieure à un bit par index MVComp transmis. En conséquence, si l'index MVComp est transmis dans la parité du résidu quantifié, la quantité de données ainsi économisée est inférieure à un bit par index MVComp, alors que la parité du résidu pourrait permettre de transporter une information de un bit par index. Par conséquent, la réduction du coût de signalisation, de même que l'efficacité de la compression, ne sont pas optimales.

O. Kim et al. ont publié en un article avec le titre « Rate distortion optimization for efficient watermarking in the DCT domain » en 31 mars 2008 en « IEEE INTERNATIONAL SYMPOSIUM ON BROADBAND MULTMEDIA SYSTEMS AND BROADCASTING », , pages 1 - 8, ISBN 978-1-4244-1648-6 un algorithme pour « «watermark bit » assis un opération modulo.

## Objet et résumé de l'invention

Un des buts de l'invention est de remédier à des inconvénients de l'état de la technique précité.

A cet effet, un objet de la présente invention concerne un procédé de codage d'au moins une image découpée en partitions, une partition courante à coder contenant des données dont au moins une donnée est affectée d'un signe.

Le procédé selon l'invention est remarquable en ce qu'il met en oeuvre, pour la partition courante précitée selon la revendication un.

Une telle disposition permet d'appliquer avantageusement la technique de dissimulation de données aux signes des données d'une partition à coder.

Un signe est en effet une information particulièrement pertinente à cacher en raison du fait que la probabilité d'apparition d'un signe positif ou négatif est équiprobable. De ce fait, étant donné qu'un signe est codé nécessairement sur un bit, il est ainsi possible, en cachant cette information, d'économiser un bit dans le signal à transmettre au décodeur, ce qui réduit sensiblement le coût de signalisation. Il convient de noter que parmi les informations (signe, amplitude, etc..) associées à une donnée d'image, il en existe très peu qui soient équiprobables. Le signe étant une information équiprobable, il y a donc un intérêt spécifique à cacher ce type d'information, ce qui permet d'augmenter les performances de compression. Dans un mode de réalisation particulier, dans le cas où une pluralité de signes est considérée au cours de l'étape de comparaison précitée, cette dernière consiste à comparer la valeur calculée d'une fonction représentative des données de la partition courante à la valeur d'une fonction représentative de la pluralité de signes. Une telle disposition permet d'optimiser les performances de compression du codeur arithmétique tout en optimisant la réduction du coût de signalisation, puisqu'elle permet de cacher plusieurs signes dans le signal à transmettre au décodeur. Corrélativement, l'invention concerne un dispositif de codage d'au moins une image découpée en partitions selon la revendication deux.

De façon correspondante, l'invention concerne aussi un procédé de décodage d'un signal de données représentatif d'au moins une image découpée en partitions qui a été précédemment codée, une partition courante à décoder contenant des données dont au moins une donnée est affectée d'un signe selon la revendication trois. Corrélativement, l'invention concerne un dispositif de décodage d'un signal de données représentatif d'au moins une image découpée en partitions qui a été précédemment codée selon la revendication quatre.

L'invention vise également un programme d'ordinateur comportant des instructions pour l'exécution des étapes du procédé de codage ou de décodage ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif de codage, le procédé de décodage, le dispositif de décodage et les programmes d'ordinateur précités présentent au moins les mêmes avantages que ceux conférés par le procédé de codage selon la présente invention.

Brève description des dessins

D'autres caractéristiques et avantages apparaîtront à la lecture de deux modes de réalisation préférés décrits en référence aux figures dans lesquelles:

- la figure 1 représente les étapes générales du procédé de codage selon l'invention,
- la figure 2 représente un dispositif de codage selon l'invention qui est apte à effectuer les étapes du procédé de codage de la figure 1,
- la figure 3 représente un mode de réalisation particulier du procédé de codage selon l'invention,
- la figure 4 représente un mode de réalisation particulier d'un dispositif de codage selon l'invention,
- la figure 5 représente les étapes générales du procédé de décodage selon l'invention,
- la figure 6 représente un dispositif de décodage selon l'invention qui est apte à effectuer les étapes du procédé de décodage de la figure 5,
- la figure 7 représente un mode de réalisation particulier du procédé de décodage selon l'invention,
- la figure 8 représente un mode de réalisation particulier d'un dispositif de décodage selon l'invention.

Description détaillée de la partie codage

Un mode de réalisation général de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC.

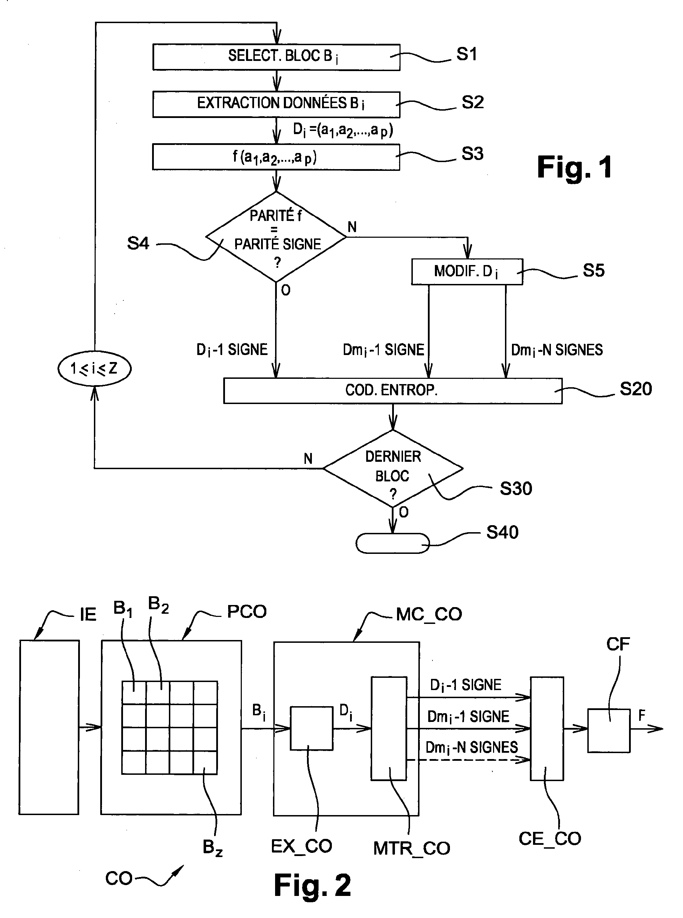

Le procédé de codage selon l'invention est représenté sous la forme d'un algorithme comportant des étapes S1 à S40, représentées à la **figure 1**.

Selon le mode de réalisation de l'invention, le procédé de codage selon l'invention est implémenté dans un dispositif de codage ou codeur CO dont un mode de réalisation est représenté sur la **figure 2**.

Conformément à l'invention, il est procédé, préalablement au codage proprement dit, à un découpage d'une image IE d'une séquence d'images à coder dans un ordre prédéterminé, en une pluralité Z de partitions $B_1, B_2,... ,B_i,..., B_z$, comme représenté sur la **figure 2**.

Il convient de noter qu'au sens de l'invention, le terme « partition » signifie unité de codage (de l'anglais « coding unit »). Cette dernière terminologie est notamment utilisée dans la norme HEVC/H.265 en cours d'élaboration, par exemple dans le document accessible à l'adresse Internet suivante :

http://phenix.int-evry.fr/jct/doc end user/current document.php?id=3286

En particulier, une telle unité de codage regroupe des ensembles de pixels de forme rectangulaire ou carrée, encore appelés blocs, macroblocs, ou bien des ensembles de pixels présentant d'autres formes géométriques.

Dans l'exemple représenté sur la figure 2, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module PCO de partitionnement représenté à la **figure 2** qui utilise par exemple un algorithme de partitionnement bien connu en tant que tel.

A la suite de ladite étape de découpage, il est procédé au codage de chacune des partitions courantes $B_i$ (i étant un entier tel que $1 \leq i \leq Z$) de ladite image IE.

Dans l'exemple représenté sur la figure 2, un tel codage est appliqué successivement à chacun des blocs $B_1$ à $B_z$ de l'image courante IE. Les blocs sont codés selon par exemple un parcours tel que le parcours « raster scan » bien connu de l'homme du métier.

Le codage selon l'invention est mis en oeuvre dans un module logiciel de codage MC_CO du codeur CO, tel que représenté sur la **figure 2.**

Au cours d'une étape S1 représentée à la **figure 1**, le module de codage MC_CO de la **figure 2** sélectionne comme bloc courant $B_i$ le premier bloc $B_1$ à coder de l'image courante IE. Comme représenté à la **figure 2**, il s'agit du premier bloc de gauche de l'image IE.

Au cours d'une étape S2 représentée à la **figure 1**, il est procédé à l'extraction de données du bloc courant $B_1$ sous la forme d'une liste $D_1 = (a_1, a_2, ..., a_P)$. Une telle extraction est effectuée par un module logiciel de EX_CO tel que représenté à la **figure 2**. De telles données sont par exemple des données pixelliques, les données pixelliques non nulles étant affectées chacune soit d'un signe positif, soit d'un signe négatif.

Chacune des données de la liste $D_1$ est associée à différentes informations numériques qui sont destinées à subir un codage entropique. De telles informations numériques sont décrites ci-dessous à titre d'exemple.

- pour chaque donnée située avant la dernière donnée non nulle de la liste $D_1$, une information numérique, telle qu'un bit, est destinée à être codée entropiquement pour indiquer si la donnée est nulle ou pas : si la donnée est nulle, c'est par exemple le bit de valeur 0 qui sera codé, tandis que si la donnée est non nulle, c'est le bit de valeur 1 qui sera codé ;
- pour chaque donnée non nulle, une information numérique, telle qu'un bit, est destinée à être codée entropiquement pour indiquer si la valeur absolue de la donnée est égale à un ou pas : si elle est égale à 1, c'est par exemple le bit de valeur 1 qui sera codé, tandis que si elle est égale à 0, c'est le bit de valeur 0 qui sera codé ;
- pour chaque donnée non nulle dont la valeur absolue est non égale à un et qui est située avant la dernière donnée non nulle, une information d'amplitude est codée entropiquement,
- pour chaque donnée non nulle, le signe qui lui est affecté est codé par une information numérique, telle qu'un bit par exemple mis à '0' (pour le signe +) ou à '1' (pour le signe -).

On va maintenant décrire, en référence à la **figure 1**, les étapes spécifiques de codage selon l'invention.

Conformément à l'invention, il est décidé d'éviter de coder entropiquement au moins un signe d'une desdites données de la liste $D_1$.

Conformément au mode de réalisation préféré, c'est le signe de la première donnée non nulle qui est destiné à être caché. Un tel signe est par exemple positif et affecté à la première donnée non nulle, telle par exemple la donnée $a_2$.

Au cours d'une étape S3 représentée à la **figure 1**, le module de traitement MTR_CO calcule la valeur d'une fonction f qui est représentative des données de la liste $D_1$.

Dans le mode préféré de réalisation où un seul signe est destiné à être caché dans le signal à transmettre au décodeur, la fonction f est la parité de la somme des données de la liste $D_1$.

Au cours d'une étape S4 représentée à la **figure 1**, le module de traitement MTR_CO vérifie si la parité de la valeur du signe à cacher correspond à la parité de la somme des données de la liste $D_1$, en vertu d'une convention définie préalablement au codeur CO.

Dans l'exemple proposé, ladite convention est telle qu'un signe positif est associé à un bit de valeur égale à zéro, tandis qu'un signe négatif est associé à un bit de valeur égale à un.

Si, d'après la convention adoptée dans le codeur CO selon l'invention, le signe est positif, ce qui correspond à une valeur de bit de codage à zéro, et que la somme des données de la liste $D_1$ est paire, il est procédé à une étape S20 de codage entropique des données de la liste $D_1$ précitée, à l'exception du signe de la première donnée non nulle $a_2$. Une telle étape S20 est représentée sur la **figure 1**.

Si, toujours d'après la convention adoptée dans le codeur CO selon l'invention, le signe est négatif, ce qui correspond à une valeur de bit de codage à un, et que la somme des données de la liste $D_1$ est impaire, il est également procédé à l'étape S20 de codage entropique des données de la liste $D_1$ précitée, à l'exception du signe de la première donnée non nulle $a_2$.

Si, d'après la convention adoptée dans le codeur CO selon l'invention, le signe est positif, ce qui correspond à une valeur de bit de codage à zéro, et que la somme des données de la liste $D_1$ est impaire, il est procédé, au cours d'une étape S5 représentée sur la **figure 1**, à une modification d'au moins une donnée modifiable de la liste $D_1$.

Si, toujours d'après la convention adoptée dans le codeur CO selon l'invention, le signe est négatif, ce qui correspond à une valeur de bit de codage à un, et que la somme des données de la liste $D_1$ est paire, il est également procédé à l'étape S5 de modification d'au moins une donnée modifiable de la liste $D_1$.

Selon l'invention, une donnée est modifiable si la modification de sa valeur ne provoque pas de désynchronisation au décodeur, une fois que cette donnée modifiée est traitée par le décodeur. Ainsi, le module de traitement MTR_CO est configuré initialement pour ne pas modifier :

- la ou les données nulles situées avant la première donnée non nulle, de façon à ce que le décodeur n'affecte pas la valeur du signe caché à cette ou ces données nulles,

- et pour des raisons de complexité de calcul, la ou les données nulles situées après la dernière donnée non nulle.

Une telle opération de modification est effectuée par le module de traitement MTR_CO de la **figure 2**.

Dans l'exemple de réalisation proposé, il est supposé que la somme totale des données de la liste $D_1$ est égale à 5, et est donc impaire. Afin que le décodeur puisse reconstruire le signe positif affecté à la première donnée non nulle $a_2$, sans que le codeur CO n'ait à transmettre cette donnée au décodeur, il faut que la parité de la somme devienne paire. En conséquence, le module de traitement MTR_CO teste, au cours de ladite étape S5, différentes modifications de données de la liste $D_1$, visant toutes à changer la parité de la somme des données. Dans le mode préféré de réalisation, il est procédé à l'ajout de +1 ou -1 à chaque donnée modifiable et à la sélection, selon un critère prédéterminé, d'une modification parmi toutes celles qui sont effectuées.

Il est alors obtenu, à l'issue de l'étape S5, une liste modifiée $Dm_1=(a'_1, a_2,...,a'_P)$.

Il convient de noter qu'au cours de cette étape, certaines modifications sont interdites. Ainsi, dans le cas où la première donnée non nulle vaut +1, il ne serait pas possible de lui ajouter -1, car elle deviendrait nulle, et elle perdrait alors sa caractéristique de première donnée non nulle de la liste $D_1$. Le décodeur attribuerait alors ultérieurement le signe décodé (par calcul de la parité de la somme des données) à une autre donnée, et il y aurait alors une erreur de décodage.

Il est ensuite procédé à l'étape S20 de codage entropique des données de la liste $Dm_1$ précitée, à l'exception du signe positif de la première donnée non nulle $a_2$, lequel signe est caché dans la parité de la somme des données.

Il convient de noter que l'ensemble des amplitudes des données de la liste $D_1$ ou de la liste modifiée $Dm_1$ est codé avant l'ensemble des signes, à l'exclusion du signe de la première donnée non nulle qui n'est pas codé comme cela a été expliqué ci-dessus.

Au cours d'une étape suivante S30 représentée sur la figure 1, le module de codage MC_CO de la figure 2 teste si le bloc courant codé est le dernier bloc de l'image IE.

Si le bloc courant est le dernier bloc de l'image IE, au cours d'une étape S40 représentée à la **figure 1**, il est mis fin au procédé de codage.

Si tel n'est pas le cas, il est procédé à la sélection du bloc suivant $B_i$ qui est alors codé conformément à l'ordre de parcours raster scan précité, par itération des étapes S1 à S20, pour $1 \leq i \leq Z$.

Une fois réalisé le codage entropique de tous les blocs $B_1$ à $B_Z$, il est procédé à la construction d'un signal F représentant, sous forme binaire, lesdits blocs codés.

La construction du signal binaire F est mise en oeuvre dans un module logiciel CF de construction de flux, tel que représenté sur la **figure 2.**

Le flux F est ensuite transmis par un réseau de communication (non représenté), à un terminal distant. Celui-ci comporte un décodeur qui sera décrit plus en détail dans la suite de la description.

On va maintenant décrire, principalement en référence à la **figure 1**, un autre mode de réalisation de l'invention.

Cet autre mode de réalisation se distingue du précédent uniquement par le nombre de signes à cacher qui est N, N étant un entier tel que $N \geq 2$.

A cet effet, la fonction f est le reste modulo $2^N$ de la somme des données de la liste $D_1$. On suppose que dans l'exemple proposé, N=2, les deux signes à cacher étant les deux premiers signes des deux premières données non nulles de la liste $D_1$, par exemple $a_2$ et $a_3$.

Au cours de l'étape S4 représentée à la **figure 1**, le module de traitement MTR_CO vérifie si la configuration des N signes, soit $2^N$ configurations possibles, correspond à la valeur du reste modulo $2^N$ de la somme des données de la liste $D_1$.

Dans l'exemple proposé où N=2, il existe $2^2=4$ configurations de signes différentes.

Ces quatre configurations obéissent à une convention au codeur CO, laquelle est par exemple déterminée de la façon suivante :

- un reste égal à zéro correspond à deux signes positifs consécutifs : +, + ;
- un reste égal à un correspond à un signe positif et un signe négatif consécutifs : +, - ;
- un reste égal à deux correspond à un signe négatif et un signe positif consécutifs : -, + ;
- un reste égal à trois correspond à deux signes négatifs consécutifs : -, -.

Si la configuration des N signes correspond à la valeur du reste modulo $2^N$ de la somme des données de la liste $D_1$, il est procédé à l'étape S20 de codage entropique des données de la liste $D_1$ précitée, à l'exception du signe respectif des deux premières données non nulles $a_2$ et $a_3$, lesquels signes sont cachés dans la parité de la somme modulo $2^N$ des données de la liste $D_1$.

Si tel n'est pas le cas, il est procédé à l'étape S5 de modification d'au moins une donnée modifiable de la liste $D_1$. Une telle modification est effectuée par le module de traitement MTR_CO de la **figure 2** de telle manière que le reste modulo $2^N$ de la somme des données modifiables de la liste $D_1$ atteigne la valeur de chacun des deux signes à cacher.

Une liste modifiée $Dm_1=(a'_1, a'_2,..., a'_P)$ est alors obtenue.

Il est ensuite procédé à l'étape S20 de codage entropique des données de la liste $Dm_1$ précitée, à l'exception du signe de la première donnée non nulle $a_2$ et du signe de la deuxième donnée non nulle $a_3$, lesquels signes sont cachés dans la parité de la somme modulo

$2^N$ des données.

Un mode de réalisation particulier de l'invention va maintenant être décrit, dans lequel le procédé de codage selon l'invention est toujours utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC.

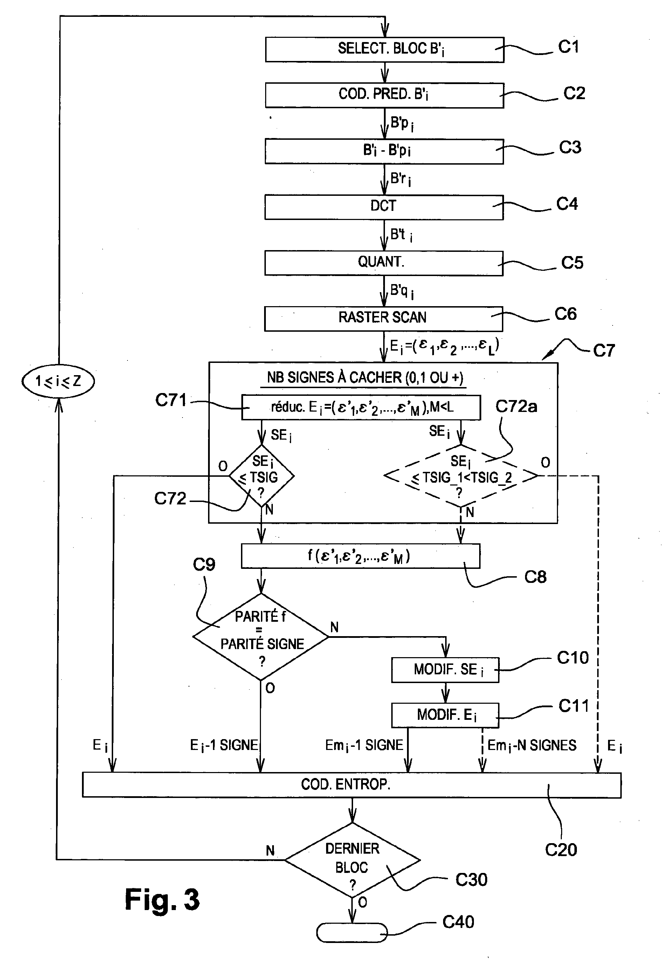

Le procédé de codage selon l'invention est représenté sous la forme d'un algorithme comportant des étapes C1 à C40, telles que représentées à la **figure 3**.

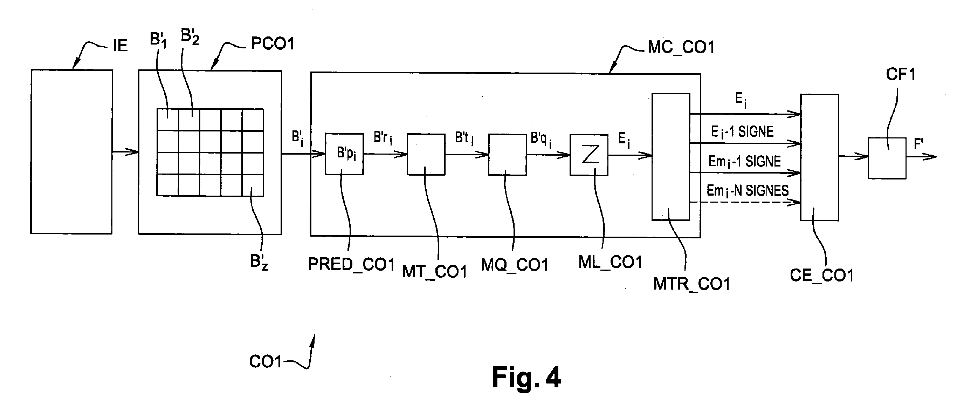

Selon le mode de réalisation de l'invention, le procédé de codage est implémenté dans un dispositif de codage ou codeur CO1 dont un mode de réalisation est représenté sur la **figure 4.**

Conformément à l'invention, et comme décrit dans les exemples précédents, il est procédé, préalablement au codage proprement dit, à un découpage d'une image IE d'une séquence d'images à coder dans un ordre prédéterminé, en une pluralité Z de partitions $B'_1$, $B'_2$,...,$B'_i$,..., $B'_z$, comme représenté sur la **figure 4.**

Dans l'exemple représenté sur la **figure 4**, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Un tel découpage est effectué par un module logiciel PCO1 de partitionnement représenté à la **figure 4** qui est identique au module de partitionnement PCO représenté à la **figure 2**.

A la suite de ladite étape de découpage, il est procédé au codage de chacune des partitions courantes $B'_i$ (i étant un entier tel que $1 \leq i \leq Z$) de ladite image IE.

Dans l'exemple représenté sur la **figure 4**, un tel codage est appliqué successivement à chacun des blocs $B'_1$ à $B'_z$ de l'image courante IE. Les blocs sont codés selon un parcours tel que par exemple le parcours « raster scan » bien connu de l'homme du métier.

Le codage selon l'invention est mis en oeuvre dans un module logiciel de codage MC_CO1 du codeur CO1, tel que représenté sur la **figure 4**.

Au cours d'une étape C1 représentée à la **figure 3**, le module de codage MC_CO1 de la **figure 4** sélectionne comme bloc courant $B'_i$ le premier bloc $B'_1$ à coder de l'image courante IE. Comme représenté à la **figure 4**, il s'agit du premier bloc de gauche de l'image IE.

Au cours d'une étape C2 représentée à la **figure 3**, il est procédé au codage prédictif du bloc courant $B'_1$ par des techniques connues de prédiction intra et/ou inter, au cours duquel le bloc $B'_1$ est prédit par rapport à au moins un bloc précédemment codé et décodé. Une telle prédiction est effectuée par un module logiciel de prédiction PRED_CO1 tel que représenté à la **figure 4**.

Il va de soi que d'autres modes de prédiction intra tels que proposés dans la norme H.264 sont possibles.

Le bloc courant $B'_1$ peut être également soumis à un codage prédictif en mode inter, au cours duquel le bloc courant est prédit par rapport à un bloc issu d'une image précédemment codée et décodée. D'autres types de prédiction sont bien entendu envisageables. Parmi les prédictions possibles pour un bloc courant, la prédiction optimale est choisie selon un critère débit distorsion bien connu de l'homme du métier.

Ladite étape de codage prédictif précitée permet de construire un bloc prédit $B'p_1$ qui est une approximation du bloc courant $B'_1$. Les informations relatives à ce codage prédictif sont destinées à être inscrites dans un signal à transmettre au décodeur. De telles informations comprennent notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter. Ces informations sont compressées par le codeur CO1.

Au cours d'une étape suivante C3 représentée à la **figure 3**, le module de prédiction PRED_CO1 compare les données relatives au bloc courant $B'_1$ aux données du bloc prédit $B'p_1$. Plus précisément, au cours de cette étape, il est procédé classiquement à la soustraction du bloc prédit $B'p_1$ du bloc courant $B'_1$ pour produire un bloc résidu $B'r_1$.

Au cours d'une étape suivante C4 représentée à la **figure 3**, il est procédé à la transformation du bloc résidu $B'r_1$ selon une opération classique de transformation directe, telle que par exemple une transformation en cosinus discrètes de type DCT, pour produire un bloc transformé $B't_1$. Une telle opération est effectuée par un module logiciel MT_CO1 de transformée, tel que représenté **figure 4**.

Au cours d'une étape suivante C5 représentée à la **figure 3**, il est procédé à la quantification du bloc transformé $B't_1$ selon une opération classique de quantification, telle que par exemple une quantification scalaire. Un bloc $B'q_1$ de coefficients quantifiés est alors obtenu. Une telle étape est effectuée au moyen d'un module logiciel de quantification MQ_CO1, tel que représenté à la **figure 4.**

Au cours d'une étape suivante C6 représentée à la **figure 3**, il est procédé à un parcours, dans un ordre prédéfini, des coefficients quantifiés du bloc $B'q_1$. Dans l'exemple représenté il s'agit d'un parcours en zigzag classique. Une telle étape est effectuée par un module logiciel de lecture ML_CO1, tel que représenté à la **figure 4**. A l'issue de l'étape C6, une liste monodimensionnelle

$E_1=(\varepsilon 1, \varepsilon 2,..., \varepsilon L)$ de coefficients est obtenue, plus connue sous l'appellation « résidu quantifié », où $L$ est un entier supérieur ou égal à 1. Chacun des coefficients de la liste $E_1$ est associé à différentes informations numériques qui sont destinées à subir un codage entropique. De telles informations numériques sont décrites ci-dessous à titre d'exemple.

Supposons que dans l'exemple représenté, $L=16$ et que la liste $E_1$ contient les seize coefficients suivants : $E_1=(0, +9, -7, 0, 0, +1, 0, -1, +2, 0, 0, +1, 0, 0, 0, 0)$.

En l'espèce :

- pour chaque coefficient situé avant le dernier coefficient non nul de la liste $E_1$, une information numérique, telle qu'un bit, est destinée à être codée entropiquement pour indiquer si le coefficient est nul ou pas : si le coefficient est nul, c'est par exemple le bit de valeur 0 qui sera codé, tandis que si le coefficient est non nul, c'est le bit de valeur 1 qui sera codé ;
- pour chaque coefficient non nul +9, -7, +1, -1, +2, +1, une information numérique, telle qu'un bit, est destinée à être codée entropiquement pour indiquer si la valeur absolue du coefficient est égale à un ou pas : si elle est égale à 1, c'est par exemple le bit de valeur 1 qui sera codé, tandis que si elle est égale à 0, c'est le bit de valeur 0 qui sera codé ;
- pour chaque coefficient non nul et dont la valeur absolue est non égale à un et situé avant le dernier coefficient non nul, tels les coefficients de valeur +9, -7, +2, une information d'amplitude (valeur absolue du coefficient à laquelle est retranchée la valeur deux) est codée entropiquement,
- pour chaque coefficient non nul, le signe qui lui est affecté est codé par une information numérique, telle qu'un bit par exemple mis à '0' (pour le signe +) ou à '1' (pour le signe -).

On va maintenant décrire, en référence à la **figure 3**, les étapes spécifiques de codage selon l'invention.

Conformément à l'invention, il est décidé d'éviter de coder entropiquement au moins une des informations numériques précitées, laquelle est au moins un signe d'un desdits coefficients de la liste $E_1$.

A cet effet, au cours d'une étape C7 représentée à la **figure 3**, il est procédé au choix du nombre de signes à cacher au cours de l'étape ultérieure de codage entropique. Une telle étape est effectuée par un module logiciel de traitement MTR_CO1, tel que représenté sur la **figure 4**.

Dans le mode préféré de réalisation, le nombre de signes à cacher est un ou zéro. En outre, conformément audit mode de réalisation préféré, c'est le signe du premier coefficient non nul qui est destiné à être caché. Dans l'exemple représenté, il s'agit donc de cacher le signe du coefficient $\varepsilon 2=+9$.

Dans un mode de réalisation alternatif, le nombre de signes à cacher est soit zéro, soit un, soit deux, soit trois, soit plus.

Conformément au mode de réalisation préféré de l'étape C7, il est procédé, au cours d'une première sous-étape C71 représentée à la **figure 3**, à la détermination, à partir de ladite liste $E_1$, d'une sous-liste $SE_1$ contenant des coefficients aptes à être modifiés $\varepsilon'1, \varepsilon'2,..., \varepsilon'M$ où $M<L$. De tels coefficients seront appelés coefficients modifiables dans la suite de la description.

Selon l'invention, un coefficient est modifiable si la modification de sa valeur quantifiée ne provoque pas de désynchronisation au décodeur, une fois que ce coefficient modifié est traité par le décodeur. Ainsi, le module de traitement MTR_CO1 est configuré initialement pour ne pas modifier :

- le ou les coefficients nuls situés avant le premier coefficient non nul, de façon à ce que le décodeur n'affecte pas la valeur du signe caché à ce ou ces coefficients nuls,
- et pour des raisons de complexité de calcul, le ou les coefficients nuls situés après le dernier coefficient non nul.

Dans l'exemple représenté, à l'issue de la sous-étape C71, la sous-liste $SE_1$ obtenue est telle que $SE_1=(9,-7,0,0,1,0,-1,2,0,0,1)$. En conséquence, onze coefficients modifiables sont obtenus.

Au cours d'une sous-étape suivante C72 représentée à la **figure 3**, le module de traitement MTR_CO1 procède à la comparaison du nombre de coefficients modifiables avec un seuil prédéterminé TSIG. Dans le mode préféré de réalisation, TSIG vaut 4.

Si le nombre de coefficients modifiables est inférieur au seuil TSIG, il est procédé, au cours d'une étape C20 représentée à la **figure 3**, à un codage entropique classique des coefficients de la liste $E_1$, tel que celui réalisé par exemple dans un codeur CABAC, désigné par la référence CE_CO1 sur la **figure 4**. A cet effet, le signe de chaque coefficient non nul de la liste $E_1$ est codé entropiquement.

Si le nombre de coefficients modifiables est supérieur au seuil TSIG, au cours d'une étape C8 représentée à la **figure 3**, le module de traitement MTR_CO1 calcule la valeur d'une fonction f qui est représentative des coefficients de la sous-liste $SE_1$.

Dans le mode préféré de réalisation où un seul signe est destiné à être caché dans le signal à transmettre au décodeur, la fonction f est la parité de la somme des coefficients de la sous-liste $SE_1$.

Au cours d'une étape C9 représentée à la **figure 3**, le module de traitement MTR_CO1 vérifie si la parité de la valeur du signe à cacher correspond à la parité de la somme des coefficients de la sous-liste $SE_1$, en vertu d'une convention définie préalablement au codeur CO1.

Dans l'exemple proposé, ladite convention est telle qu'un signe positif est associé à un bit de valeur égale à zéro, tandis qu'un signe négatif est associé à un bit de valeur égale à un.

Si, d'après la convention adoptée dans le codeur CO1 selon l'invention, le signe est positif, ce qui correspond à une valeur de bit de codage à zéro, et que la somme des coefficients de la sous-liste $SE_1$ est paire, il est procédé à l'étape C20 de codage entropique des coefficients de la liste $E_1$ précitée, à l'exception du signe du coefficient $\varepsilon2$.

Si, toujours d'après la convention adoptée dans le codeur C01 selon l'invention, le signe est négatif, ce qui correspond à une valeur de bit de codage à un, et que la somme des coefficients de la sous-liste $SE_1$ est impaire, il est également procédé à l'étape C20 de codage entropique des coefficients de la liste $E_1$ précitée, à l'exception du signe du coefficient $\varepsilon2$.

Si, d'après la convention adoptée dans le codeur C01 selon l'invention, le signe est positif, ce qui correspond à une valeur de bit de codage à zéro, et que la somme des coefficients de la sous-liste $SE_1$ est impaire, il est procédé, au cours d'une étape C10 représentée sur la **figure 3**, à une modification d'au moins un coefficient modifiable de la sous-liste $SE_1$.

Si, toujours d'après la convention adoptée dans le codeur C01 selon l'invention, le signe est négatif, ce qui correspond à une valeur de bit de codage à un, et que la somme des coefficients de la sous-liste $SE_1$ est paire, il est également procédé à l'étape C10 de modification d'au moins un coefficient modifiable de la sous-liste $SE_1$.

Une telle opération de modification est effectuée par le module de traitement MTR_CO1 de la **figure 4**.

Dans l'exemple de réalisation où $SE_1=(+9,-7,0,0,+1,0,-1,+2,0,0,+1)$, la somme totale des coefficient est égale à 5, et est donc impaire. Afin que le décodeur puisse reconstruire le signe positif affecté au premier coefficient non nul, $\varepsilon2=+9$, sans que le codeur C01 n'ait à transmettre ce coefficient au décodeur, il faut que la parité de la somme devienne paire. En conséquence, le module de traitement MTR_CO1 teste, au cours de ladite étape C10, différentes modifications de coefficients de la sous-liste $SE_1$, visant toutes à changer la parité de la somme des coefficients. Dans le mode préféré de réalisation, il est procédé à l'ajout de +1 ou -1 à chaque coefficient modifiable et à la sélection d'une modification parmi toutes celles qui sont effectuées.

Dans le mode préféré de réalisation, une telle sélection constitue la prédiction optimale selon un critère de performance qui est par exemple le critère débit distorsion bien connu de l'homme du métier. Un tel critère s'exprime par l'équation (1) ci-dessous:

$$(1)\ J=D+\lambda R\ \text{où}$$

D représente la distorsion entre le macrobloc original et le macrobloc reconstruit, R représente le coût en bits du codage des informations de codage et $\lambda$ représente un multiplicateur de Lagrange, dont la valeur peut être fixée préalablement au codage.

Dans l'exemple proposé, la modification qui entraîne une prédiction optimale selon le critère débit-distorsion précité est l'ajout de la valeur 1 au deuxième coefficient -7 de la sous-liste $SE_1$.

Il est alors obtenu, à l'issue de l'étape C10, une sous-liste modifiée $SEm_1=(+9,+6,0,0,+1,0,-1,+2,0,0,+1)$

Il convient de noter qu'au cours de cette étape, certaines modifications sont interdites. Ainsi, dans le cas où le premier coefficient non nul $\varepsilon2$ aurait valu +1, il n'aurait pas été possible de lui ajouter -1, car il serait devenu nul, et il aurait alors perdu sa caractéristique de premier coefficient non nul de la liste $E_1$. Le décodeur aurait alors attribué ultérieurement le signe décodé (par calcul de la parité de la somme des coefficients) à un autre coefficient, et il y aurait alors eu une erreur de décodage.

Au cours d'une étape C11 représentée à la **figure 3**, le module de traitement MTR_CO1 procède à une modification correspondante de la liste $E_1$. La liste modifiée suivante $Em_1=(0,+9,-6,0,0,+1,0,-1,+2,0,0,+1,0,0,0,0)$ est alors obtenue.

Il est ensuite procédé à l'étape C20 de codage entropique des coefficients de la liste $Em_1$ précitée, à l'exception du signe du coefficient $\varepsilon2$, qui est le signe + du coefficient 9 dans l'exemple proposé, lequel signe est caché dans la parité de la somme des coefficients.

Il convient de noter que l'ensemble des amplitudes des coefficients de la liste $E_1$ ou de la liste modifiée $Em_1$ est codé avant l'ensemble des signes, à l'exclusion du signe du premier coefficient non nul $\varepsilon2$ qui n'est pas codé, comme cela a été expliqué ci-dessus.

Au cours d'une étape suivante C30 représentée à la **figure 3**, le module de codage MC_CO1 de la **figure 4** teste si le bloc courant codé est le dernier bloc de l'image IE.

Si le bloc courant est le dernier bloc de l'image IE, au cours d'une étape C40 représentée à la **figure 3**, il est mis fin au procédé de codage.

Si tel n'est pas le cas, il est procédé à la sélection du bloc suivant $B'_i$ qui est alors codé conformément à l'ordre de parcours raster scan précité, par itération des étapes C1 à C20, pour $1 \leq i \leq Z$.

Une fois réalisé le codage entropique de tous les blocs $B'_1$ à $B'_Z$, il est procédé à la construction d'un signal F' représentant, sous forme binaire, lesdits blocs codés.

La construction du signal binaire F' est mise en oeuvre dans un module logiciel CF1 de construction de flux, tel que représenté sur la **figure 4**.

Le flux F' est ensuite transmis par un réseau de communication (non représenté), à un terminal distant. Celui-ci comporte un décodeur qui sera décrit plus en détail dans la suite de la description.

On va maintenant décrire, principalement en référence à la **figure 3**, un autre mode de réalisation de l'invention.

Cet autre mode de réalisation se distingue du précédent uniquement par le nombre de coefficients à cacher qui est soit 0, soit N, N étant un entier tel que $N \geq 2$.

A cet effet, la sous-étape de comparaison C72 précitée est remplacée par la sous-étape C72a représentée en pointillé sur la **figure 3**, au cours de laquelle il est procédé à la comparaison du nombre de coefficients modifiables avec plusieurs seuils prédéterminés $0 < TSIG\_1 < TSIG\_2 < TSIG\_3...$, de telle façon que si le nombre de coefficients modifiables est compris entre $TSIG\_N$ et $TSIG\_N+1$, N signes sont destinés à être cachés.

Si le nombre de coefficients modifiables est inférieur au premier seuil $TSIG\_1$, il est procédé, au cours de l'étape C20 précitée, au codage entropique classique des coefficients de la liste $E_1$. A cet effet, le signe de chaque coefficient non nul de la liste $E_1$ est codé entropiquement.

Si le nombre de coefficients modifiables est compris entre le seuil $TSIG\_N$ et $TSIG\_N+1$, au cours d'une étape C8 représentée à la **figure 3**, le module de traitement MTR_CO1 calcule la valeur d'une fonction f qui est représentative des coefficients de la sous-liste $SE_1$.

Dans cet autre mode de réalisation, la décision au codeur étant de cacher N signes, la fonction f est le reste modulo $2^N$ de la somme des coefficients de la sous-liste $SE_1$. On suppose que dans l'exemple proposé, N=2, les deux signes à cacher étant les deux premiers signes des deux premiers coefficients non nuls respectivement, à savoir $\varepsilon 2$ et $\varepsilon 3$.

Au cours de l'étape suivante C9 représentée à la **figure 3**, le module de traitement MTR_CO1 vérifie si la configuration des N signes, soit $2^N$ configurations possibles, correspond à la valeur du reste modulo $2^N$ de la somme des coefficients de la sous-liste $SE_1$.

Dans l'exemple proposé où N=2, il existe $2^2=4$ configurations de signes différentes.

Ces quatre configurations obéissent à une convention au codeur C01, laquelle est par exemple déterminée de la façon suivante :

- un reste égal à zéro correspond à deux signes positifs consécutifs : +, + ;
- un reste égal à un correspond à un signe positif et un signe négatif consécutifs : +, - ;
- un reste égal à deux correspond à un signe négatif et un signe positif consécutifs : -, + ;
- un reste égal à trois correspond à deux signes négatifs consécutifs : -, -.

Si la configuration des N signes correspond à la valeur du reste modulo $2^N$ de la somme des coefficients de la sous-liste $SE_1$, il est procédé à l'étape C20 de codage entropique des coefficients de la liste $E_1$ précitée, à l'exception du signe du coefficient $\varepsilon 2$ et du coefficient

$\varepsilon 3$, lesquels signes sont cachés dans la parité de la somme modulo $2^N$ des coefficients.

Si tel n'est pas le cas, il est procédé à l'étape C10 de modification d'au moins un coefficient modifiable de la sous-liste $SE_1$. Une telle modification est effectuée par le module de traitement MTR_CO1 de la **figure 4**, de telle manière que le reste modulo $2^N$ de la somme des coefficients modifiables de la sous-liste $SE_1$ atteigne la valeur de chacun des deux signes à cacher.

Au cours de l'étape C11 précitée, le module de traitement MTR_CO1 procède à une modification correspondante de la liste $E_1$. Une liste modifiée $Em_1$ est alors obtenue.

Il est ensuite procédé à l'étape C20 de codage entropique des coefficients de la liste $Em_1$ précitée, à l'exception du signe du coefficient $\varepsilon 2$ et du signe du coefficient $\varepsilon 3$, lesquels signes sont cachés dans la parité de la somme modulo $2^N$ des coefficients.

Description détaillée de la partie décodage

Un mode de réalisation général du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

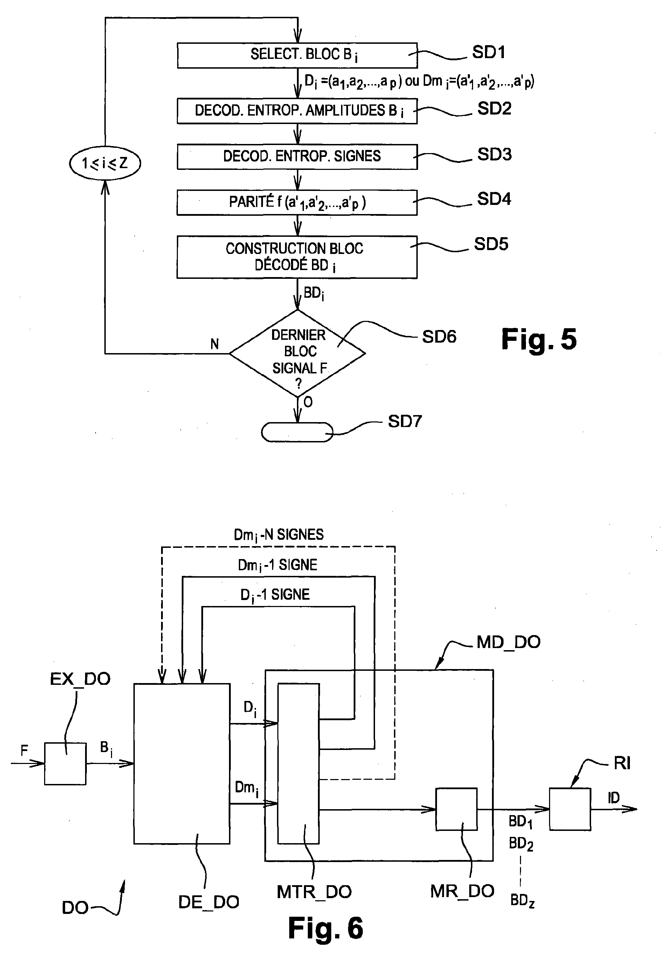

Le procédé de décodage selon l'invention est représenté sous la forme d'un algorithme comportant des étapes SD1 à SD7 représentées à la **figure 5.**

Selon le mode de réalisation général de l'invention, le procédé de décodage selon l'invention est implémenté dans un dispositif de décodage ou décodeur DO, tel que représenté à la **figure 6**, qui est adapté à recevoir le flux F délivré par le codeur CO de la **figure 2.**

Au cours d'une étape préliminaire non représentée sur la **figure 5**, il est procédé à l'identification, dans le signal de données F reçu, des partitions $B_1$ à $B_z$ qui ont été codées précédemment par le codeur CO. Dans le mode préféré de réalisation, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module logiciel EX_DO d'analyse de flux, tel que représenté à la **figure 6**.

Au cours d'une étape SD1 représentée à la **figure 5**, le module EX_DO de la **figure 6** sélectionne comme bloc courant $B_i$ le premier bloc $B_1$ à décoder. Une telle sélection consiste par exemple à placer un pointeur de lecture dans le signal F au début des données du

premier bloc $B_1$.

Il est ensuite procédé au décodage de chacun des blocs codés sélectionnés.

Dans l'exemple représenté sur la **figure 5**, un tel décodage est appliqué successivement à chacun des blocs codés $B_1$ à $B_z$. Les blocs sont décodés selon par exemple un parcours « raster scan » bien connu de l'homme du métier.

Le décodage selon l'invention est mis en oeuvre dans un module logiciel de décodage MD_DO du décodeur DO, tel que représenté sur la **figure 6.**

Au cours d'une étape SD2 représentée à la **figure 5**, il est d'abord procédé au décodage entropique du premier bloc courant $B_1$ qui a été sélectionné. Une telle opération est effectuée par un module de décodage entropique DE_DO représenté sur la **figure 6**, par exemple de type CABAC. Au cours de cette étape, le module DE_DO effectue un décodage entropique des informations numériques correspondant à l'amplitude de chacune des données codées de la liste $D_1$ ou de la liste modifiée $Dm_1$. A ce stade, seuls les signes des données de la liste $D_1$ ou de la liste modifiée $Dm_1$ ne sont pas décodés.

Dans le cas où le module de traitement MTR_DO reçoit la liste $D_1 = (a_1, a_2,..., a_P)$, il est procédé, au cours d'une étape SD3 représentée à la **figure 5**, à un décodage entropique classique de tous les signes des données de la liste $D_1$. Un tel décodage est effectué par le décodeur CABAC, désigné par la référence DE_DO sur la **figure 6**. A cet effet, le signe de chaque donnée non nulle de la liste $D_1$ est décodé entropiquement.

Dans le cas où le module de traitement MTR_DO reçoit la liste modifiée $Dm_1=(a'_1, a'_2,...,a'_P)$, il est procédé, au cours de ladite étape SD3, au décodage entropique classique de tous les signes des données de la liste $Dm_1$, à l'exception du signe de la première donnée non nulle a2.

Au cours d'une étape SD4 représentée à la **figure 5**, le module de traitement MTR_DO calcule la valeur d'une fonction f qui est représentative des données de la liste $Dm_1$, de façon à déterminer si la valeur calculée est paire ou impaire.

Dans le mode préféré de réalisation où un seul signe est caché dans le signal F, la fonction f est la parité de la somme des données de la liste $Dm_1$.

Conformément à la convention utilisée au codeur CO, qui est la même au décodeur DO, une valeur paire de la somme des données de la liste $Dm_1$ signifie que le signe de la première donnée non nulle de la liste modifiée $Dm_1$ est positif, tandis qu'une valeur impaire de la somme des données de la liste $Dm_1$ signifie que le signe de la première donnée non nulle de la liste modifiée $Dm_1$ est négatif.

Dans l'exemple de réalisation, la somme totale des données est paire. En conséquence, à l'issue de l'étape SD4, le module de traitement MTR_DO en déduit que le signe caché de la première donnée non nulle a2 est positif.

Au cours d'une étape SD5 représentée à la **figure 5**, il est procédé à la construction du bloc décodé $BD_1$. Une telle opération est effectuée par un module logiciel de reconstruction MR_DO représenté à la **figure 6**.

Au cours d'une étape SD6 représentée à la **figure 5**, le module de décodage MD_DO teste si le bloc courant décodé est le dernier bloc identifié dans le signal F.

Si le bloc courant est le dernier bloc du signal F, au cours d'une étape SD7 représentée à la **figure 5**, il est mis fin au procédé de décodage.

Si tel n'est pas le cas, il est procédé à la sélection du bloc suivant $B_i$ à décoder, conformément à l'ordre de parcours raster scan précité, par itération des étapes SD1 à SD5, pour $1 \leq i \leq Z$.

On va maintenant décrire, principalement en référence à la **figure 5**, un autre mode de réalisation de l'invention.

Cet autre mode de réalisation se distingue du précédent uniquement par le nombre de signes cachés qui est maintenant égal à N, N étant un entier tel que N>2.

A cet effet, au cours de l'étape SD3 précitée, il est procédé au décodage entropique classique de tous les signes des données de la liste $Dm_1$, à l'exception des N signes respectifs des premières données non nulles de ladite liste modifiée $Dm_1$, lesdits N signes étant cachés.

Dans cet autre mode de réalisation, le module de traitement MTR_DO calcule, au cours de l'étape SD4, la valeur de la fonction f qui est le reste modulo $2^N$ de la somme des données de la liste $Dm_1$. On suppose que dans l'exemple proposé, N=2.

Le module de traitement MTR_DO en déduit alors la configuration des deux signes cachés qui sont affectés respectivement à chacune des deux premières données non nulles a2 et a3, selon la convention utilisée au codage.

Une fois ces deux signes reconstruits, il est procédé à la mise en oeuvre des étapes SD5 à SD7 décrites ci-dessus.

Un mode de réalisation particulier du procédé de décodage selon l'invention va maintenant être décrit, dans lequel le procédé de décodage est implémenté de manière logicielle ou matérielle par modifications d'un décodeur initialement conforme à la norme H.264/MPEG-4 AVC.

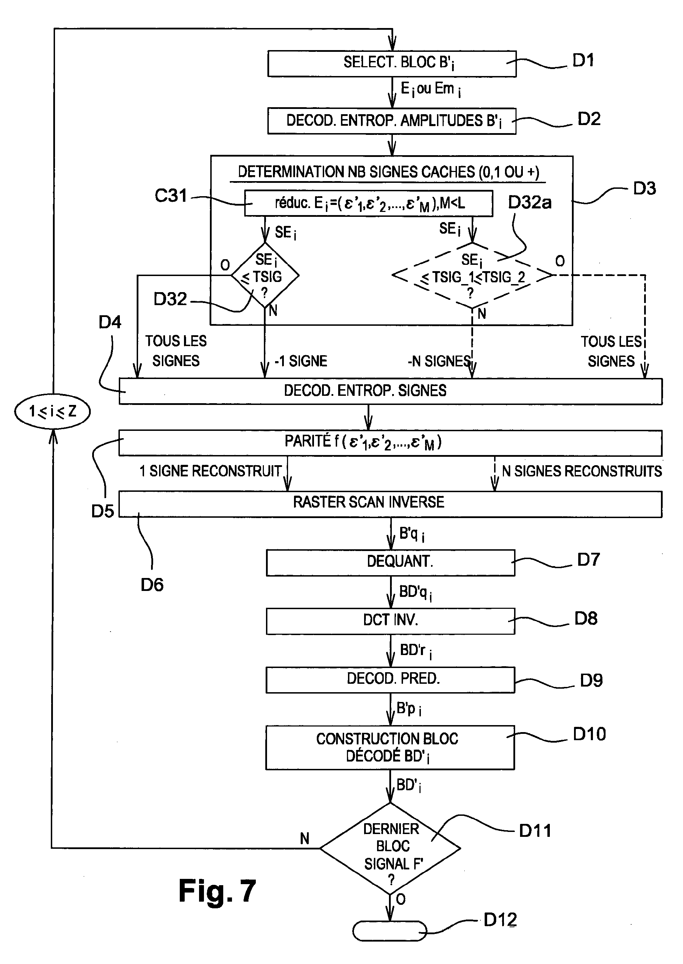

Le procédé de décodage selon l'invention est représenté sous la forme d'un algorithme comportant des étapes D1 à D12 représentées à la **figure 7**.

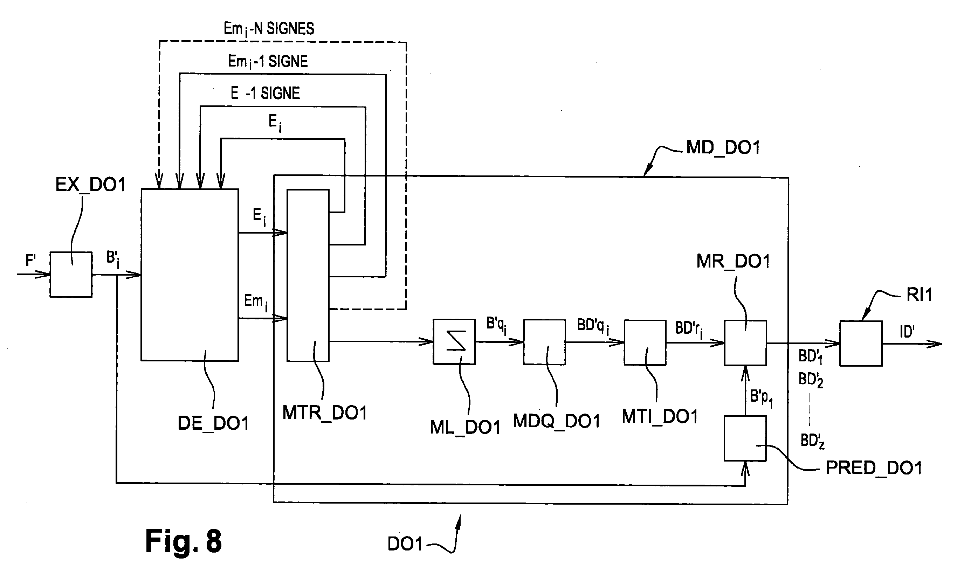

Selon le mode de réalisation de l'invention, le procédé de décodage selon l'invention est implémenté dans un dispositif de décodage ou décodeur D01, tel que représenté à la **figure 8,** lequel est apte à traiter le signal F' délivré par le codeur CO1 de la **figure 4.**

Au cours d'une étape préliminaire non représentée sur la **figure 7**, il est procédé à l'identification, dans le signal de données F' reçu, des partitions B'$_1$ à B'$_z$ qui ont été codées précédemment par le codeur CO1. Dans le mode préféré de réalisation, lesdites partitions sont des blocs qui ont une forme carrée et ont tous la même taille. En fonction de la taille de l'image qui n'est pas forcément un multiple de la taille des blocs, les derniers blocs à gauche et les derniers blocs en bas peuvent ne pas être carrés. Dans un mode alternatif de réalisation, les blocs peuvent être par exemple de taille rectangulaire et/ou non alignés les uns avec les autres.

Chaque bloc ou macrobloc peut par ailleurs être lui-même divisé en sous blocs qui sont eux-mêmes subdivisibles.

Une telle identification est effectuée par un module logiciel EX_DO1 d'analyse de flux, tel que représenté à la **figure 8**.

Au cours d'une étape D1 représentée à la **figure 7**, le module EX_DO1 de la **figure 8** sélectionne comme bloc courant B'$_i$ le premier bloc B'$_1$ à décoder. Une telle sélection consiste par exemple à placer un pointeur de lecture dans le signal F' au début des données du premier bloc B'$_1$.

Il est ensuite procédé au décodage de chacun des blocs codés sélectionnés.

Dans l'exemple représenté sur la **figure 7**, un tel décodage est appliqué successivement à chacun des blocs codés B'$_1$ à B'$_z$. Les blocs sont décodés selon par exemple un parcours « raster scan » bien connu de l'homme du métier.

Le décodage selon l'invention est mis en oeuvre dans un module logiciel de décodage MD_DO1 du décodeur D01, tel que représenté sur la **figure 8**.

Au cours d'une étape D2 représentée à la **figure 7**, il est d'abord procédé au décodage entropique du premier bloc courant B'$_1$ qui a été sélectionné. Une telle opération est effectuée par un module de décodage entropique DE_DO1 représenté sur la **figure 8**, par exemple de type CABAC. Au cours de cette étape, le module DE_DO1 effectue un décodage entropique des informations numériques correspondant à l'amplitude de chacun des coefficients codés de la liste E$_1$ ou de la liste modifiée Em$_1$. A ce stade, seuls les signes des coefficients de la liste E$_1$ ou de la liste modifiée Em$_1$ ne sont pas décodés.

Au cours d'une étape D3 représentée à la **figure 7**, il est procédé à la détermination du nombre de signes susceptibles d'avoir été cachés au cours de l'étape précédente de codage entropique C20. Une telle étape D3 est effectuée par un module logiciel de traitement MTR_DO1, tel que représenté sur la **figure 8**. L'étape D3 est similaire à l'étape C7 précitée de détermination du nombre de signes à cacher.

Dans le mode préféré de réalisation, le nombre de signes cachés est un ou zéro. En outre, conformément audit mode de réalisation préféré, c'est le signe du premier coefficient non nul qui est caché. Dans l'exemple représenté, il s'agit donc du signe positif du coefficient ε2=+9.

Dans un mode de réalisation alternatif, le nombre de signes cachés est soit zéro, soit un, soit deux, soit trois, soit plus.

Conformément au mode de réalisation préféré de l'étape D3, il est procédé, au cours d'une première sous-étape D31 représentée à la **figure 7**, à la détermination, à partir de ladite liste E$_1$ ou de la liste modifiée Em$_1$, d'une sous-liste contenant des coefficients ε'1, ε'2,..., ε'M où M<L susceptibles d'avoir été modifiés au codage.

Une telle détermination est effectuée de la même manière qu'à l'étape de codage C7 précitée.

Comme le module de traitement MTR_CO1 précité, le module de traitement MTR_DO1 est configuré initialement pour ne pas modifier :

- le ou les coefficients nuls situés avant le premier coefficient non nul,
- et pour des raisons de complexité de calcul, le ou les coefficients nuls situés après le dernier coefficient non nul.

Dans l'exemple représenté, à l'issue de la sous-étape D31, il s'agit de la sous-liste SEm$_1$ telle que SEm$_1$ = (9, -6, 0, 0, 1, 0, -1, 2, 0, 0, 1). En conséquence, onze coefficients susceptibles d'avoir été modifiés sont obtenus.

Au cours d'une sous-étape suivante D32 représentée à la **figure 7**, le module de traitement MTR_DO1 procède à la comparaison du nombre de coefficients susceptibles d'avoir été modifiés avec un seuil prédéterminé TSIG. Dans le mode préféré de réalisation, TSIG vaut 4.

Si le nombre de coefficients susceptibles d'avoir été modifiés est inférieur au seuil TSIG, il est procédé, au cours d'une étape D4 représentée à la **figure 7**, à un décodage entropique classique de tous les signes des coefficients de la liste E$_1$. Un tel décodage est effectué par le décodeur CABAC, désigné par la référence DE_DO1 sur la **figure 8**. A cet effet, le signe de chaque coefficient non nul de la liste E$_1$ est décodé entropiquement.

Si le nombre de coefficients susceptibles d'avoir été modifiés est supérieur au seuil TSIG, il est procédé, au cours de ladite étape D4, au décodage entropique classique de tous les signes des coefficients de la liste Em$_1$, à l'exception du signe du premier coefficient non nul ε2.

Au cours d'une étape D5 représentée à la **figure 7**, le module de traitement MTR_DO1 calcule la valeur d'une fonction f qui est représentative des coefficients de la sous-liste SEm$_1$ de façon à déterminer si la valeur calculée est paire ou impaire.

Dans le mode préféré de réalisation où un seul signe est caché dans le signal F', la fonction f est la parité de la somme des coefficients de la sous-liste SEm$_1$.

Conformément à la convention utilisée au codeur CO1, qui est la même au décodeur D01, une valeur paire de la somme des coefficients de la sous-liste SEm$_1$ signifie que le signe du premier coefficient non nul de la

liste modifiée $Em_1$ est positif, tandis qu'une valeur impaire de la somme des coefficients de la sous-liste $SEm_1$ signifie que le signe du premier coefficient non nul de la liste modifiée $Em_1$ est négatif.

Dans l'exemple de réalisation où $SEm_1$=(+9,-6,0,0,+1,0,-1,+2,0,0,+1), la somme totale des coefficients est égale à 6, et est donc paire. En conséquence, à l'issue de l'étape D5, le module de traitement MTR_DO1 en déduit que le signe caché du premier coefficient non nul $\varepsilon2$ est positif.

Au court d'une étape D6 représentée à la **figure 7**, et à l'aide de toutes les informations numériques reconstruites au cours des étapes D2, D4 et D5, il est procédé à la reconstruction des coefficients quantifiés du bloc $B'q_1$ dans un ordre prédéfini. Dans l'exemple représenté, il s'agit d'un parcours en zigzag inverse au parcours en zigzag effectué au cours de l'étape de codage C6 précitée. Une telle étape est effectuée par un module logiciel de lecture ML_DO1, tel que représenté à la **figure 8**. Plus précisément, le module ML_DO1 procède à l'inscription des coefficients de la liste $E_1$ (monodimensionnelle) dans le bloc $B'q_1$ (bidimensionnel), en utilisant ledit ordre de parcours en zigzag inverse.

Au cours d'une étape D7 représentée à la **figure 7**, il est procédé à la déquantification du bloc résidu quantifié $B'q_1$ selon une opération classique de déquantification qui est l'opération inverse de la quantification effectuée au codage à l'étape C5 précitée, pour produire un bloc déquantifié décodé $BD'q_1$. Une telle étape est effectuée au moyen d'un module logiciel de déquantification MDQ_DO1, tel que représenté à la **figure 8**.

Au cours d'une étape D8 représentée à la **figure 7**, il est procédé à la transformation inverse du bloc déquantifié $BD'q_1$ qui est l'opération inverse de la transformation directe effectuée au codage à l'étape C4 précitée. Un bloc résidu décodé $BD'r_1$ est alors obtenu. Une telle opération est effectuée par un module logiciel MTI_DO1 de transformée inverse, tel que représenté **figure 8**.

Au cours d'une étape D9 représentée à la **figure 7**, il est procédé au décodage prédictif du bloc courant $B'_1$. Un tel décodage prédictif est effectué classiquement par des techniques connues de prédiction intra et/ou inter, au cours duquel le bloc $B'_1$ est prédit par rapport à au moins un bloc précédemment décodé. Une telle opération est effectuée par un module de décodage prédictif PRED_DO1 tel que représenté **figure 8**.

Il va de soi que d'autres modes de prédiction intra tels que proposés dans la norme H.264 sont possibles.

Au cours de cette étape, le décodage prédictif est effectué à l'aide des éléments de syntaxe décodés à l'étape précédente et comprenant notamment le type de prédiction (inter ou intra), et le cas échéant, le mode de prédiction intra, le type de partitionnement d'un bloc ou macrobloc si ce dernier a été subdivisé, l'indice d'image de référence et le vecteur de déplacement utilisés dans le mode de prédiction inter.

Ladite étape de décodage prédictif précitée permet de construire un bloc prédit $B'p_1$.

Au cours d'une étape D10 représentée à la **figure 7**, il est procédé à la construction du bloc décodé $BD'_1$ en ajoutant au bloc prédit $B'p_1$ le bloc résidu décodé $BD'r_1$. Une telle opération est effectuée par un module logiciel de reconstruction MR_DO1 représenté à la **figure 8**.

Au cours d'une étape D11 représentée à la **figure 7**, le module de décodage MD_DO1 teste si le bloc courant décodé est le dernier bloc identifié dans le signal F'.

Si le bloc courant est le dernier bloc du signal F', au cours d'une étape D12 représentée à la **figure 7**, il est mis fin au procédé de décodage.

Si tel n'est pas le cas, il est procédé à la sélection du bloc suivant $B'_i$ à décoder conformément à l'ordre de parcours raster scan précité, par itération des étapes D1 à D10, pour $1 \leq i \leq Z$.

On va maintenant décrire, principalement en référence à la **figure 7**, un autre mode de réalisation de l'invention.

Cet autre mode de réalisation se distingue du précédent uniquement par le nombre de coefficients cachés qui est soit 0, soit N, N étant un entier tel que $N \geq 2$.

A cet effet, la sous-étape de comparaison D32 précitée est remplacée par la sous-étape D32a représentée en pointillé sur la **figure 7**, au cours de laquelle il est procédé à la comparaison du nombre de coefficients susceptibles d'avoir été modifiés avec plusieurs seuils prédéterminés $0 < TSIG\_1 < TSIG\_2 < TSIG\_3...$, de telle façon que si le nombre desdits coefficients est compris entre $TSIG\_N$ et $TSIG\_N+1$, N signes ont été cachés.

Si le nombre desdits coefficients est inférieur au premier seuil $TSIG\_1$, il est procédé, au cours de l'étape D4 précitée, au décodage entropique classique de tous les signes des coefficients de la liste $E_1$. A cet effet, le signe de chaque coefficient non nul de la liste $E_1$ est décodé entropiquement.

Si le nombre desdits coefficients est compris entre le seuil $TSIG\_N$ et $TSIG\_N+1$, il est procédé, au cours de l'étape D4 précitée, au décodage entropique classique de tous les signes des coefficients de la liste $E_1$, à l'exception des N signes respectifs des premiers coefficients non nuls de ladite liste modifiée $Em_1$, lesdits N signes étant cachés.

Dans cet autre mode de réalisation, le module de traitement MTR_DO1 calcule, au cours de l'étape D5, la valeur de la fonction f qui est le reste modulo $2^N$ de la somme des coefficients de la sous-liste $SEm_1$. On suppose que dans l'exemple proposé, N=2.

Le module de traitement MTR_DO1 en déduit alors la configuration des deux signes cachés qui sont affectés respectivement à chacun des deux premiers coefficients non nuls $\varepsilon2$ et $\varepsilon3$, selon la convention utilisée au codage.

Une fois ces deux signes reconstruits, il est procédé à la réalisation des étapes D6 à D12 décrites ci-dessus.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, selon un mode de réalisation simplifié par rapport à celui représenté à la **figure 4**, le codeur CO1 pourrait être configuré pour cacher au moins N' signes prédéterminés, avec N'≥1, au lieu de soit zéro, soit un ou N signes prédéterminés. Dans ce cas, l'étape de comparaison C72 ou C72a serait supprimée. De façon correspondante, selon un mode de réalisation simplifié par rapport à celui représenté à la **figure 8**, le décodeur D01 serait configuré pour reconstruire N' signes prédéterminés au lieu de soit zéro, soit un ou N signes prédéterminés. Dans ce cas, l'étape de comparaison D32 ou D32a serait supprimée. En outre, le critère de décision appliqué à l'étape de codage C72 et à l'étape de décodage D32 pourrait être remplacé par un autre type de critère. A cet effet, au lieu de comparer à un seuil le nombre de coefficients modifiables ou le nombre de coefficients susceptibles d'avoir été modifiés, le module de traitement MTR_CO1 ou MTR_DO1 pourrait appliquer un critère de décision qui est respectivement fonction de la somme des amplitudes des coefficients modifiables ou susceptibles d'avoir été modifiés, ou encore du nombre de zéros présents parmi les coefficients modifiables ou susceptibles d'avoir été modifiés.

**Revendications**

1. Procédé de codage d'au moins une image découpée en partitions, une partition courante (Bi) à coder contenant des données dont au moins une donnée est affectée d'un signe, les données étant des coefficients de transformation direct,
ledit procédé de codage étant **caractérisé en ce qu'**il met en oeuvre, pour ladite partition courante, les étapes suivantes:

   - calcul (S3) de la valeur d'une fonction représentative de la parité de la somme des données de ladite partition courante à l'exclusion dudit signe soit caché,
   - comparaison (S4) de ladite valeur calculée à la parité dudit signe,
   - en fonction du résultat de ladite comparaison, modification (S5) ou non d'au moins une des données de la partition courante,
   - en cas de modification, codage (S20) des données de la partition comprenant ladite au moins une donnée modifiée sans le signe de ladite au moins une donnée modifiée.

2. Dispositif de codage (CO) d'au moins une image découpée en partitions, une partition courante à coder contenant des données dont au moins une donnée est affectée d'un signe, les données étant les coefficients de transformation direct,
ledit dispositif étant **caractérisé en ce qu'**il comprend des moyens de traitement (MTR_CO) qui, pour ladite partition courante à coder, sont aptes à:

   - calculer la valeur d'une fonction représentative de la parité de la somme des données de ladite partition courante à l'exclusion dudit signe,
   - comparer ladite valeur calculée à la parité dudit signe,
   - modifier ou non au moins une des données de la partition courante en fonction du résultat de ladite comparaison,

   et **en ce qu'**il comprend des moyens (CE_CO) de codage des données de la partition comprenant ladite au moins une donnée modifiée sans le signe de ladite au moins une donnée modifiée, en cas de modification par lesdits moyens de traitement.

3. Procédé de décodage d'un signal de données représentatif d'au moins une image découpée en partitions qui a été précédemment codée, une partition courante (Bi) à décoder contenant des données dont au moins une donnée est affectée d'un signe, les données étant les coefficients de transformation direct,
ledit procédé de décodage étant **caractérisé en ce qu'**il comprend, pour ladite partition courante, les étapes suivantes :

   - décodage (SD2, SD3) des données de ladite partition courante, à l'exclusion dudit signe,
   - calcul (SD4) de la valeur d'une fonction représentative de la parité de la somme des données décodées de ladite partition courante,
   - obtention, à partir de ladite valeur calculée, de la valeur dudit signe, si la parité de la somme des données a une première valeur le signe est positif et si la parité de la somme des données a une deuxième valeur le signe est négatif.

4. Dispositif (DO) de décodage d'un signal de données représentatif d'au moins une image découpée en partitions qui a été précédemment codée, une partition courante à décoder contenant des données dont au moins une donnée est affectée d'un signe, les données étant les coefficients de transformation direct,
ledit dispositif de décodage étant **caractérisé en ce qu'**il comprend, pour ladite partition courante à décoder, des moyens de traitement (MTR_DO) qui sont aptes à:

   - décoder les données de ladite partition courante, à l'exclusion dudit signe,

- calculer la valeur d'une fonction représentative de la parité de la somme des données décodées de ladite partition courante,
- obtenir, à partir de ladite valeur calculée, la valeur dudit signe, si la parité de la somme des données a une première valeur le signe est positif et si la parité de la somme des données a une deuxième valeur la signe est négatif.

5. Programme d'ordinateur comportant des instructions pour mettre en oeuvre le procédé de codage selon la revendication 1, lorsque ledit procédé de codage est exécuté sur un ordinateur.

6. Programme d'ordinateur comportant des instructions pour mettre en oeuvre le procédé de décodage selon la revendication 4, lorsque ledit procédé de décodage est exécuté sur un ordinateur.

**Patentansprüche**

1. Verfahren zum Codieren wenigstens eines in Partitionen unterteilten Bildes, wobei eine zu codierende aktuelle Partition (Bi) Daten enthält, wovon wenigstens ein Datenelement mit einem Vorzeichen behaftet ist, wobei die Daten Koeffizienten einer direkten Transformation sind,
wobei das Codierungsverfahren **dadurch gekennzeichnet ist, dass** es für diese aktuelle Partition die folgenden Schritte ausführt:

- Berechnen (S3) des Wertes einer Funktion, die die Parität der Summe der Daten der aktuellen Partition unter Ausschluss des Vorzeichens, das verdeckt ist, repräsentiert,
- Vergleichen (S4) des berechneten Wertes mit der Parität des Vorzeichens,
- in Abhängigkeit vom Ergebnis des Vergleichens Modifizieren (S5) oder nicht Modifizieren wenigstens eines der Datenelemente der aktuellen Partition,
- im Fall des Modifizierens Codieren (S20) der Daten der Partition, die das wenigstens eine modifizierte Datenelement enthält, ohne das Vorzeichen des wenigstens einen modifizierten Datenelements.

2. Vorrichtung (CO) zum Codieren wenigstens eines in Partitionen unterteilten Bildes, wobei eine zu codierende aktuelle Partition Daten enthält, wovon wenigstens ein Datenelement mit einem Vorzeichen behaftet ist, wobei die Daten die Koeffizienten einer direkten Transformation sind,
wobei die Vorrichtung **dadurch gekennzeichnet ist, dass** sie Verarbeitungsmittel (MTR_CO) umfasst, die für diese zu codierende aktuelle Partition dafür ausgelegt sind:

- den Wert einer Funktion, die die Parität der Summe der Daten der aktuellen Partition repräsentiert, unter Ausschluss des Vorzeichens zu berechnen,
- den berechneten Wert mit der Parität des Vorzeichens zu vergleichen,
- wenigstens eines der Datenelemente der aktuellen Partition in Abhängigkeit vom Ergebnis des Vergleichens zu modifizieren oder nicht zu modifizieren,

und dass sie Mittel (CE_CO) umfasst, um im Fall des Modifizierens durch die Verarbeitungsmittel Daten der Partition, die das wenigstens eine modifizierte Datenelement enthält, ohne das Vorzeichen des wenigstens einen modifizierten Datenelements zu codieren.

3. Verfahren zum Decodieren eines Datensignals, dass wenigstens ein in Partitionen unterteiltes Bild repräsentiert, das vorher codiert worden ist, wobei eine zu decodierende aktuelle Partition (Bi) Daten enthält, wovon wenigstens ein Datenelement mit einem Vorzeichen behaftet ist, wobei die Daten die Koeffizienten einer direkten Transformation sind,
wobei das Decodierungsverfahren **dadurch gekennzeichnet ist, dass** es für die aktuelle Partition die folgenden Schritte umfasst:

- Decodieren (SD2, SD3) von Daten der aktuellen Partition unter Ausschluss des Vorzeichens,
- Berechnen (SD4) des Wertes einer Funktion, die die Parität der Summe der die codierten Daten der aktuellen Partition repräsentiert,
- anhand des berechneten Wertes Erhalten des Wertes des Vorzeichens, wobei, falls die Parität der Summe der Daten einen ersten Wert hat, das Vorzeichen positiv ist und, falls die Parität der Summe der Daten einen zweiten Wert hat, das Vorzeichen negativ ist.

4. Vorrichtung (DO) zum Decodieren eines Datensignals, das wenigstens ein in Partitionen unterteiltes Bild repräsentiert, das im Voraus codiert worden ist, wobei eine zu decodierende aktuelle Partition Daten enthält, wovon wenigstens ein Datenelement mit einem Vorzeichen behaftet ist, wobei die Daten die Koeffizienten einer direkten Transformation sind,
wobei die Decodierungsvorrichtung **dadurch gekennzeichnet ist, dass** sie für die aktuelle zu decodierende Partition Verarbeitungsmittel (MTR DO) umfasst, die dafür ausgelegt sind:

- die Daten der aktuellen Partition unter Ausschluss des Vorzeichens zu decodieren,
- den Wert einer Funktion zu berechnen, die die Parität der Summe der decodierten Daten der aktuellen Partition repräsentiert,

- anhand des berechneten Wertes den Wert des Vorzeichens zu erhalten, wobei, falls die Parität der Summe der Daten einen ersten Wert hat, das Vorzeichen positiv ist und, falls die Parität der Summe der Daten einen zweiten Wert hat, das Vorzeichen negativ ist.

**5.** Rechnerprogramm, das Befehle enthält, um das Codierungsverfahren nach Anspruch 1 auszuführen, wenn das Codierungsverfahren auf einem Rechner ausgeführt wird.

**6.** Rechnerprogramm, das Befehle enthält, um das Decodierungsverfahren nach Anspruch 4 auszuführen, wenn das Decodierungsverfahren auf einem Rechner ausgeführt wird.


**Claims**

**1.** Method for coding at least one image split up into partitions, a current partition ($B_i$) to be coded containing data at least one data item of which is allotted a sign, the data being direct transformation coefficients,
said coding method being **characterized in that** it implements, for said current partition, the following steps:

- calculation (S3) of the value of a function representative of the parity of the sum of the data of said current partition with the exclusion of said sign,
- comparison (S4) of said calculated value with the parity of said sign,
- as a function of the result of said comparison, modification (S5) or otherwise of at least one of the data of the current partition,
- in the case of modification, coding (S20) of the data of the partition comprising said at least one modified data item without the sign of said at least one modified data item.

**2.** Device (CO) for coding at least one image split up into partitions, a current partition to be coded containing data at least one data item of which is allotted a sign, the data being direct transformation coefficients,
said device being **characterized in that** it comprises processing means (MTR_CO) which, for said current partition to be coded, are able to:

- calculate the value of a function representative of the parity of the sum of the data of said current partition with the exclusion of said sign,
- compare said calculated value with the parity of said sign,
- modify or otherwise at least one of the data of the current partition as a function of the result of said comparison,

and **in that** it comprises means (CE_CO) for coding the data of the partition comprising said at least one modified data item without the sign of said at least one modified data item, in the case of modification by said processing means.

**3.** Method for decoding a data signal representative of at least one image split up into partitions which has been previously coded, a current partition ($B_i$) to be decoded containing data at least one data item of which is allotted a sign, the data being direct transformation coefficients,
said decoding method being **characterized in that** it comprises, for said current partition, the following steps:

- decoding (SD2, SD3) of the data of said current partition, with the exclusion of said sign,
- calculation (SD4) of the value of a function representative of the parity of the sum of the decoded data of said current partition,
- obtaining, on the basis of said calculated value, of the value of said sign, if the parity of the sum of the data has a first value the sign is positive and if the parity of the sum of the data has a second value the sign is negative.

**4.** Device (DO) for decoding a data signal representative of at least one image split up into partitions which has been previously coded, a current partition to be decoded containing data at least one data item of which is allotted a sign, the data being direct transformation coefficients,
said decoding device being **characterized in that** it comprises, for said current partition to be decoded, processing means (MTR_DO) which are able to:

- decode the data of said current partition, with the exclusion of said sign,
- calculate the value of a function representative of the parity of the sum of the decoded data of said current partition,
- obtain, on the basis of said calculated value, the value of said sign, if the parity of the sum of the data has a first value the sign is positive and if the parity of the sum of the data has a second value the sign is negative.

**5.** Computer program comprising instructions for implementing the coding method according to Claim 1, when said coding method is executed on a computer.

**6.** Computer program comprising instructions for implementing the decoding method according to Claim 3, when said decoding method is executed on a com-

**EP 2 777 269 B1**

puter.

**Fig. 1**

SELECT. BLOC $B_i$ — S1

EXTRACTION DONNÉES $B_i$ — S2

$D_i = (a_1, a_2, ..., a_p)$

$f(a_1, a_2, ..., a_p)$ — S3

S4 — PARITÉ f = PARITÉ SIGNE ?

N → MODIF. $D_i$ — S5

$1 \leq i \leq Z$

O

$D_i$-1 SIGNE

$Dm_i$-1 SIGNE

$Dm_i$-N SIGNES

COD. ENTROP. — S20

N — DERNIER BLOC ? — S30

O

S40

IE    $B_1$    $B_2$    PCO    MC_CO    CF

$B_i$    $D_i$    $D_i$-1 SIGNE    F

$Dm_i$-1 SIGNE

$Dm_i$-N SIGNES

$B_z$    EX_CO    MTR_CO    CE_CO

CO

**Fig. 2**

**Fig. 3**

Fig. 4

**Fig. 5**

**Fig. 6**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.-M. THIESSE ; J. JUNG ; M. ANTONINI.** Data Hiding of Motion Information in Chroma and Luma Samples for Video Compression. *International workshop on multimédia signal processing,* 2011

- Rate distortion optimization for efficient watermarking in the DCT domain. *IEEE INTERNATIONAL SYMPOSIUM ON BROADBAND MULTMEDIA SYSTEMS AND BROADCASTING,* 31 Mars 2008, ISBN 978-1-4244-1648-6, 1-8